# EUROPEAN PATENT SPECIFICATION

(11) **EP 3 246 611 B1**
(45) Date of publication and mention of the grant of the patent: **02.10.2019**
(21) Application number: 15877747.4
(22) Date of filing: 24.11.2015
(51) Int. Cl.: F16L 15/04, E21B 17/042

(54) **SCREW JOINT FOR PIPE**
SCHRAUBVERBINDUNG FÜR RÖHRE
JOINT À VIS POUR TUYAU

(30) Priority: 15.01.2015 JP 2015005676
(43) Date of publication of application: 22.11.2017
(73) Proprietor: JFE Steel Corporation, Tokyo 100-0011 (JP)
(72) Inventor: YONEYAMA, Tsuyoshi, Tokyo 100-0011 (JP); CHIKATSUNE, Hiroshi, Tokyo 100-0011 (JP); YOSHIKAWA, Masaki, Tokyo 100-0011 (JP); SEKI, Haruhiko, Tokyo 100-0011 (JP); TAKANO, Jun, Tokyo 100-0011 (JP); NAGAHAMA, Takuya, Tokyo 100-0011 (JP); UETA, Masateru, Tokyo 100-0011 (JP); KAWAI, Takamasa, Tokyo 100-0011 (JP)
(74) Representative: Haseltine Lake Kempner LLP
(86) International application number: PCT/JP2015/005830
(87) International publication number: WO 2016/113790

(56) References cited:
- WO-A1-2012/128015
- WO-A1-2014/006866
- JP-A- H1 096 489
- JP-A- H08 121 660
- JP-A- 2005 351 324
- JP-B1- 4 930 647
- JP-B2- 4 535 064

## Description

### Field of the Invention

The present invention relates to a screw joint for a pipe, and more particularly to a screw joint for a pipe having an outer diameter of 168.3mm or less. This screw joint has excellent sealing property and excellent compression resistance, and is particularly suitable for connecting oil well pipes which include, in the same category, tubing and casing used for search and production for an oil well or a gas well in general, namely, steel pipes for an OCTG (oil country tubular goods), riser pipes, line pipes and the like.

### Description of the Related Art

A screw joint has been popularly used for connecting pipes used in an oil-producing industrial facility such as oil well pipes . In connecting pipes used for search and production of oil or gas, conventionally, a standard screw joint which is stipulated in A.P.I. (American Petroleum Institute) standard has been conventionally used.

Incidentally, deepening of a well for crude oil or a natural gas has recently been in progress and the number of horizontal wells and directional wells from vertical wells has been increasing and hence, the drilling and production environment has become severe. Further, the number of wells developed in an extremely challenging environment such as oceans and polar regions has been increasing and hence, the properties which screw joints have to satisfy are diversified including compression resistance property, bending resistance property, and external pressure seal property (external pressure resistance property). In view of the above, the number of cases has increased where a special screw joint having high properties which is referred to as "premium joint" is being used.

A premium joint is a joint where pin members each of which includes tapered threads, a seal portion (to be more specific, a metal touch seal portion) and a shoulder portion (to be more specific, a torque shoulder portion) and a box member which includes tapered threads, seal portions (to be more specific, metal touch seal portions) and shoulder portions (to be more specific, torque shoulder portions) are joined to each other. The tapered threads are important for firmly fixing the pipe joint. The seal portions play a role of ensuring sealing property by bringing the box member and the pin members into metal-metal contact at such portions, and the shoulder portions form shoulder surfaces which function as stoppers during make-up of the joint.

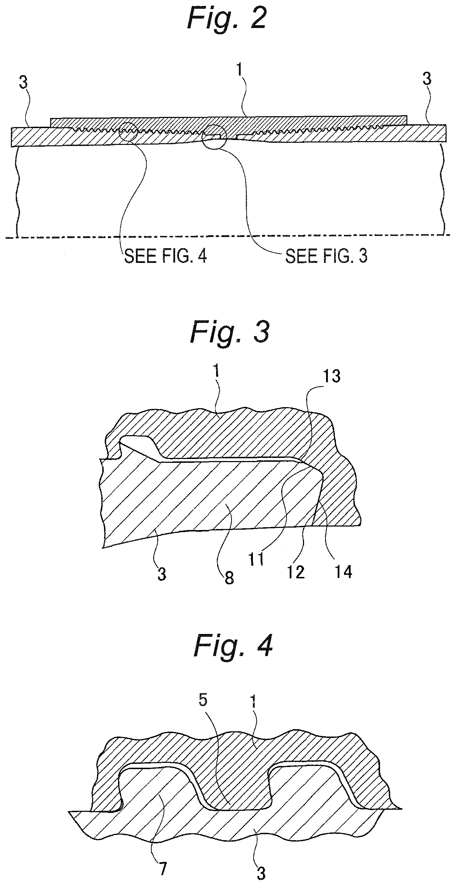

Fig. 2, Fig. 3 and Fig. 4 are schematic explanatory views of an oil-well-pipe use premium joint. Fig. 2, Fig. 3 and Fig. 4 are also longitudinal section views of a screw joint of a circular pipe (a cross-sectional view in an axial direction). The screw joint includes pin members 3 (pin 3) and a box member 1 corresponding to the pin members 3. The pin member 3 has, on an outer surface thereof, male threaded portions 7 and non-threaded portions which are referred to as nose portions 8 (pin noses 8) which are formed adjacent to the male threaded portions 7 on respective distal end sides of the pin 3. The nose portion 8 has a seal portion 11 on an outer peripheral surface thereof, and a torque shoulder portion 12 on an end surface thereof. The box member 1 which faces the pin members 3 has female threaded portions 5, seal portions 13 and shoulder portions 14 on an inner surface thereof, and these portions are portions being threadedly engaged with or brought into contact with the male threaded portions 7, the seal portions 11 and the shoulder portions 12 of the pin members 3 respectively.

As the related art relating to the above-mentioned premium joint, techniques disclosed in Patent Literature 1 to 7 are cited.

### Citation List

### Patent Literature

PTL 1: Japanese Patent Publication No. 4535064
PTL 2: Japanese Patent Publication No. 4208192
PTL 3: Japanese examined Utility Model Application Publication No. 61-44068
PTL 4: Japanese Patent Publication No. 4300187
PTL 5: Japanese Unexamined Patent Application Publication No. 2001-124253
PTL 6: Japanese Patent Publication No. 2705506
PTL 7: Japanese Patent Publication No. 4930647

### Summary of Invention

### Technical Problem

In the examples shown in Fig. 2 to Fig. 4, a metal touch seal portion (a seal portion which forms a contact surface between the seal portion 11 and the seal portion 13) is formed on a distal end portion of the pin nose 8. On the other hand, in Patent Literature 1, there is proposed the screw joint where, to increase an external pressure resistance property, the metal touch seal portion is disposed in the vicinity of a threaded portion of the pin nose 8, and the nose portion extends in an elongated manner to a shoulder portion from the seal portion. In the screw joint disclosed in Patent Literature 1, the pin nose which is not in contact with the box member is extended in an elongated manner so as to form a shape non-continuous with the seal portion thus preventing the reduction in the thickness of the pin nose. With such a configuration, besides the enhancement of the above-mentioned external pressure resistance property, an axial compression resistance property can be also enhanced.

Patent Literature 2 discloses a technique where in the same manner as the technique of Patent Literature 1, a portion having a shape non-continuous with the seal portion which becomes an appendix is formed ranging from the seal portion to a distal end of the pin nose. With such a configuration, the rigidity in the radial direction can be ensured and the rigidity in the axial direction is lowered. The appendix is deformed at the time of make-up and the appendix is recovered at the time of applying a tensile strength thus enhancing a tensile resistance property.

As described in Patent Literatures 1 and 2, to arrange the position of the seal portion in the vicinity of the threads of the pin and the position of the seal portion away from the distal end of the pin nose is effective for enhancing the external pressure resistance property and the tensile resistance property and, at the same time, for imparting the stability property to the screw joint. These advantages and effects can be confirmed also through an FEM simulation and the like. Further, the pin nose having a non-continuous shape with the seal portion is, when a strong axial compression force is applied to the pin nose, deformed per se thus giving rise to an effect of reducing plastic deformation of a torque shoulder portion of the box member. On the other hand, however, undesired deformation may be generated in a non-continuous portion. It is considered that the generation of such undesired deformation depends on a make-up torque.

The make-up torque is affected by a lubrication condition, a property of a surface and the like and hence, as a design which does not largely depend on the make-up torque on the lubrication condition, the property of the surface and the like, there is provided a radial directional sealing method where a component of a seal contact pressure in the radial direction is relatively increased. For example, Patent Literature 3 discloses an example of a radial directional sealing method where a screw joint has a large pin seal R shape and a small seal tapered angle. However, the radial directional sealing method where the seal tapered angle is set small has a drawback that galling is liable to occur at the time of make-up and break-out. Particularly, when it is necessary to take a large seal interference amount for the sake of ensuring sealing property and stability of sealing, galling is more liable to occur.

In Patent Literature 4, to overcome these drawbacks, a seal contact region is increased by setting a radius of a toroidal (conic curved rotary surface shape) pin seal surface large thus lowering a contact pressure. This is an effective measure so that a risk of the occurrence of galling on a metal touch seal portion is largely reduced. However, when a contact pressure is lowered by setting a large R, lowering of a contact pressure is generated by any slight problem thus giving rise to a drawback that when a micro leak path is formed in the metal touch seal portion, leakage cannot be easily stopped. Further, it is difficult to physically separate the metal touch seal portion from a distal end of the nose because of such large R. Accordingly, to ensure a length of the metal touch seal portion and a length of the distal end of the pin nose to some extent or more, there may be a case where a thickness of the distal end of the pin nose becomes excessively small.

With respect to axial compression resistance property, as described in Patent Literature 5 and Patent Literature 6, it is effective to make a gap on a stab flank side small in a screw portion. However, when this gap is excessively small, galling is liable to occur in the screw portion. Accordingly, it is necessary to take an appropriate gap.

Patent Literature 7 proposes a screw joint as a means which can overcome the above-mentioned drawbacks which could not be overcome by the techniques disclosed in Patent Literatures 1 to 6. The screw joint is configured such that an outer peripheral surface of a pin nose portion of a pin member is formed of a composite R curved shape which projects toward the outside as viewed in cross section taken in the axial direction, and an inner peripheral surface of a box member which faces the outer peripheral surface of the nose portion is formed into a tapered shape. With such a configuration, an advantageous effect is expected that a screw joint for a pipe capable of enhancing sealing property, compression resistance property and galling resistance property can be acquired.

However, inventors of the present invention have found through studies made by experiments and calculation that when the technique described in patent literature 7 is applied to a case where a pipe having an outer diameter of 168. 3mm or less, for example, is used as a pin member, rigidity of the pin member becomes insufficient so that external pressure resistance property may be deteriorated.

As described heretofore, the screw joints for pipes proposed conventionally still have some drawbacks to be solved. Particularly, when an outer diameter of a raw pipe portion of the pin member, that is, an outer diameter of a portion of a length remaining after removing a length of a male threaded portion on a distal end side from the total length of the pin member is 168.3mm or less, to sufficiently cope with diversity of properties which the screw joint is required to satisfy such as the above-mentioned compression resistance property, bending resistance property, external pressure seal property, there is a room for further improvements. The present invention has been made in view of such circumstances, and it is an object of the present invention to provide a screw joint for a pipe which can enhance sealing property, compression resistance property and galling resistance property particularly when an outer diameter of a raw pipe portion is 168.3mm or less.

### Solution to Problem

The inventors of the present invention have made extensive studies based on the screw joint for pipes described in patent literature 7 so as to find out means for overcoming the above-mentioned drawbacks, and have arrived at the present invention which has the following configurations constituting the gist of the present invention. That is, the present invention is as follows.
(1) A screw joint for a pipe including:
   a pin member having a male threaded portion, a nose portion extending toward a pipe end side from the male threaded portion, and a shoulder portion formed on a distal end of the nose portion; and
   a box member having a female threaded portion which is threadedly joined to the male threaded portion by thread engagement, an inner peripheral surface which faces an outer peripheral surface of the nose portion of the pin member in an opposed manner, and a shoulder portion which is brought into contact with the shoulder portion of the pin member, wherein
   the outer peripheral surface of the nose portion of the pin member and the inner peripheral surface of the box member are brought into a metal to metal contact due to joining of the pin member and the box member by threaded engagement, and a contact interface forms a seal surface,
   the outer peripheral surface of the nose portion of the pin member is formed into an outwardly projecting convex curve as viewed in cross section taken along an axial direction of the pin member,
   the convex curve is formed into a curved shape where a composite R curve is formed by sequentially connecting a plurality of outwardly convex arcs having different radii of curvature R from each other on a generating line of a cylindrical portion disposed adjacent to the male threaded portion, a radius of curvature R of the arc is increased as the arc is away from the male threaded portion, and a tangent of the arc on a connecting point agrees with a tangent of the arc which is a connection counterpart,
   the inner peripheral surface of the box member is formed into a tapered surface which interferes with the outer peripheral surface of the nose portion of the pin member at the time of joining with the pin member, and
   an outer diameter of a raw pipe portion of the pin member is set to 168.3mm or less, and a length of the nose portion is set to 5mm or more and less than 20mm.
(2) The screw joint for a pipe according to the item (1), wherein an angle which each arc in the inside of the composite R curve makes is set such that the closer to the male threaded portion, the larger the angle which each arc makes is.
(3) The screw joint for a pipe according to the items (1) or (2), wherein any one of the connecting points in the composite R curve becomes a contact starting point with the tapered surface.
(4) The screw joint for a pipe according to any one of items (1) to (3), wherein an angle which the tapered surface makes with an axial direction of the joint is set to a value which falls within a range of 10 degrees.
(5) The screw joint for a pipe according to any one of items (1) to (4), wherein the male threaded portion and the female threaded portion have a stab flank angle which falls within a range of 0 degrees to 30 degrees.
(6) The screw joint for a pipe according to any one of items (1) to (5), wherein the male threaded portion and the female threaded portion have a load flank angle which falls within a range of -5- degrees to 4 degrees.
(7) The screw joint for a pipe according to any one of items (1) to (6), wherein a shoulder angle of the shoulder portion falls within a range of 0 degrees to 20 degrees.
(8) The screw joint for a pipe according to any one of items (1) to (7), wherein the male threaded portion and the female threaded portion have a thread gap which falls within a range of 0.01 to 0.1mm.
(9) The screw joint for a pipe according to any one of items (1) to (8), wherein, in place of the composite R curve which is formed by sequentially connecting the plurality of arcs having different radii of curvature R from each other on the generating line of the cylindrical portion disposed adjacent to the male threaded portion,
   a different composite R curve is used, the different composite R curve being formed by sequentially connecting a plurality of arcs having different radii of curvature R from each other on a generating line of a cylindrical portion disposed adjacent to the male threaded portion directly or by way of line segments each having a length of 2.5mm or less.
(10) The screw joint for a pipe according to any one of items (1) to (8), wherein, in place of the composite R curve which is formed by sequentially connecting the plurality of arcs having the different radii of curvature R from each other on the generating line of the cylindrical portion disposed adjacent to the male threaded portion,
   a different composite R curve is used, the different composite R curve being formed by sequentially connecting a plurality of arcs having different radii of curvature R from each other on a generating line of a cylindrical portion disposed adjacent to the male threaded portion by way of arcs each having a length of 2.5mm or less and having a radius of 250mm or more and three or more times as large as a radius of the arc arranged adjacent to the arc.

### Advantageous Effects of Invention

According to the present invention, even when an outer diameter of the raw pipe portion of the pin member is 168.3mm or less, it is possible to provide a screw joint for a pipe which can enhance sealing property, compression resistance property and galling resistance property.

### Brief Description of Drawing

Fig. 1 is a cross-sectional view showing a nose portion of a screw joint for a pipe according to an embodiment of the present invention;
Fig. 2 is a cross-sectional view showing a conventional screw joint for a pipe;
Fig. 3 is an enlarged cross-sectional view of a pin nose and an area in the vicinity of the pin nose shown in Fig. 2;
Fig. 4 is an enlarged cross-sectional view showing a threaded portion in Fig. 2;
Fig. 5 is a cross-sectional view showing the definitions of a thread gap, a load flank angle, and a stab flank angle; and
Fig. 6 is a chart showing a load path of a sealability test simulation.

### Description of Embodiments

As described previously, the arrangement of the seal portion at the position away from the distal end of the nose and the elongated extension of the nose portion from the seal portion to the shoulder portion are effective for improving external pressure resistance property and tensile resistance property and imparting stability property to the screw joint. In view of the above, the inventors of the present invention have studied a shape of the periphery of a seal portion by which the seal portion can be separated from the distal end of the nose (or the shoulder) and, at the same time, the excessive reduction of a thickness of the distal end of the pin nose can be prevented.

As a result, the inventors of the present invention have arrived at an idea that the seal portion can be separated from the distal end of the nose without decreasing a thickness of the distal end of the pin nose by satisfying the following requirements 1 to 3 when the following conditions 1 to 3 are satisfied.

### (Condition 1)

The outer peripheral surface of the nose portion of the pin member is formed into a face shape which forms an outwardly convex curve as viewed in cross section taken along an axial direction of the pin member.

### (Condition 2)

The inner peripheral surface of the box member which faces the outer peripheral surface of the nose portion of the pin member is formed into a tapered face shape where the inner peripheral surface intersects with the convex curve of the pin member at two points as viewed in cross section taken along an axial direction of the box member.

### (Condition 3)

A metal touch seal portion is formed by the outer peripheral surface of the nose portion of the pin member and the inner peripheral surface (hereinafter referred to as "tapered surface") of the box member which faces the outer peripheral surface of the nose portion, and an interface of the seal portion on a pin member side and an interface of the seal portion on a coupling portion side respectively form seal surfaces of both members.

### (Requirement 1)

The convex curve of the pin member is a composite R curve which is formed by sequentially connecting a plurality of arcs having different radii of curvature R from each other on a generating line of a cylindrical portion disposed adjacent to the male threaded portion.

### (Requirement 2)

The remoter the arc is disposed from the male threaded portion, the larger the radius of curvature R of the arc becomes.

### (Requirement 3)

The convex curve of the pin member is formed of a curved shape where a tangent on a connecting point of the arc agrees with a tangent on a connecting point of the connection counterpart arc.

As a result of further studies made by the inventors of the present invention, the inventors have found that in the case where the outer diameter of the raw pipe portion of the pin member is 168.3mm or less, even when the nose portion and the box member are formed into the above-mentioned shapes, depending on the length of the nose portion of the pin member, there arises a case where the rigidity of the pin member becomes insufficient so that the acquisition of sufficient sealing property is difficult. In view of the above, the inventors have made further studies and, as a result of the studies, the inventors have found that by setting the length of the nose portion to 5mm or more and less than 20mm, sufficient properties can be acquired even when the outer diameter of the raw pipe portion of the pin member is 168.3mm or less.

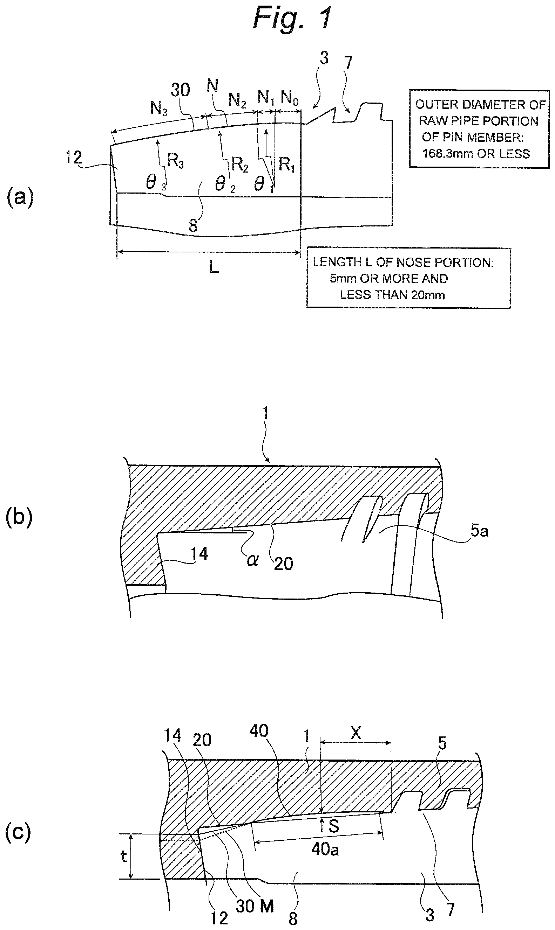

In Fig. 1, (a), (b) and (c) are cross-sectional views showing a nose portion of a screw joint for a pipe according to an embodiment of the present invention. In Fig. 1, (a) shows a pin member 3, (b) shows a box member 1, and (c) shows a state where the pin member 3 and the box member 1 are joined to each other. The pin member 3 is a member which is mounted on an end portion of a pipe, and includes: a male threaded portion 7; a nose portion 8 continuously formed with the male threaded portion 7 on a pipe end side; and a torque shoulder portion 12 formed on a distal end of the nose portion 8. An outer diameter of a raw pipe portion of the pin member 3 is 168.3mm or less. It is preferable that the outer diameter of the raw pipe portion of the pin member be 60.3mm or more which is usually adopted by an OCTG, a riser pipe and a line pipe. On the other hand, the box member 1 includes: a female threaded portion 5 which is threadedly joined to the male threaded portion 7 of the pin member 3; a tapered surface 20 which is an inner peripheral surface of the box member 1 which faces an outer peripheral surface of the nose portion 8 (a nose portion outer peripheral surface 30) in a state where the pin member 3 and the box member 1 are joined to each other by screw joining; and a shoulder portion 14 which is brought into contact with the shoulder portion 12.

The nose portion outer peripheral surface 30 is formed into an outwardly convex shape as viewed in cross section in an axial direction of the pin member 3. On the other hand, an inner peripheral surface of the box member 1 which faces the nose portion outer peripheral surface 30 in an opposed manner is formed into a tapered surface 20 (a conically shaped surface) having a fixed inclined angle (referred to as "taper angle") α with respect to the axial direction of the screw joint. When the pin member 3 and the box member 1 are joined to each other, the tapered surface 20 and the nose portion outer peripheral surface 30 interfere with each other thus forming a seal portion 40. The taper angle α is set such that the convex curve and a generating line of the tapered surface 20 intersect with each other at two points as viewed in cross section in an axial direction of the screw joint in an imaginary non-interference joined state between the pin member 3 and the box member 1. In an actual state, the seal portion 40 is formed within a range (interference region 40a) sandwiched between two intersecting points.

The convex curve formed on the nose portion outer peripheral surface 30 is explained using the case of a composite R curve formed of three arcs shown in Fig. 1. The curve is the composite R curve N formed by sequentially connecting arcs N₁, N₂, N₃ having different radii of curvatures R₁, R₂, R₃ from each other to a line segment N₀ which is a generating line of a cylindrical portion disposed adjacent to the male threaded portion 7. In the composite R curve N, the remoter the arc is disposed from the male threaded portion 7, the larger the radius of curvature of the arc becomes. That is, the composite R curve N has a curved shape where the radii of curvature are set to satisfy a relationship of R₁<R₂<R₃. With such a configuration, the shoulder portion 12 at the distal end of the pin nose 8 can acquire a large thickness (shoulder thickness) t. As a comparison example, a case is indicated by a broken line in Fig. 1(c) where a convex curve is formed of a single R curve M (single arc having a radius of curvature R), and an interference region of a seal portion of the convex curve is set substantially equal to the interference region 40a of the seal portion 40 of the composite R curve N. It is understood that a shoulder thickness becomes small in the case of the single R curve M compared to the composite R curve N. When the shoulder thickness becomes small, the rigidity of the pin nose 8 becomes insufficient so that a contact face pressure of the seal portion 40 cannot be ensured properly. On the other hand, in an attempt of ensuring the shoulder thickness using the single R curve, the position of the seal portion 40 becomes remote from the male threaded portion 7. This configuration is not suitable from a viewpoint of ensuring external pressure resistance property and tensile resistance property.

Further, the composite R curve N is formed into a curved shape where a tangent on a connecting point on the arc agrees with a tangent on a connecting point of the connection counterpart arc. For example, at the connecting point between the arc N₁ and the arc N₂ and at the connecting point between the arc N₂ and the arc N₃, tangents of both arcs to be connected to each other are made to agree with each other. Accordingly, the convex curve is formed into a continuous curve shape having no critical point on the curve and hence, the undesired deformation of the nose portion can be suppressed. Both arcs to be connected to each other may be directly connected to each other or may not be directly connected to each other. When both arcs are not directly connected to each other, it is preferable that the arcs be sequentially joined to each other with a line segment having a length of 2.5mm or less interposed therebetween. Further, the arcs may be connected to each other with a line segment which overlaps with a common tangent of the arcs or an arc having a sufficiently large radius so that it is unnecessary to substantially take into account a change in angle (radius being 250mm or more and three or more times as large as a radius of the arc arranged adjacent to the arc) interposed therebetween. To ensure a contact face pressure which prevents the formation of a leak path, it is preferable that the above-mentioned line segment or the length of the arc having the sufficiently large radius be set to 2.5mm or less.

With respect to angles θ₁, θ₂, θ₃ which the respective arcs N₁, N₂, N₃ make, it is preferable that the closer the arc is disposed to the male threaded portion 7, the larger the angle which each arc makes, that is, a relationship of θ₁>θ₂>θ₃ is established. Otherwise, it is difficult to design the composite R curve within a limited length of the nose portion 8 of the pin member 3 (the pin nose length L in Fig. 1(a)) or within a limited length of the interference region 40a (referred to as a seal contact length).

Further, it is preferable that the connecting point of the arc in the composite R curve, for example, either one of the connecting point between the arcs N₁ and N₂ and the connecting point between the arcs N₂ and N₃ agree with a contact starting point which means a point which is brought into contact with the tapered surface 20 of the box member 1 first of all. By setting any one of the connecting points of the arc within the composite R curve as the contact starting point, in the contact face pressure distribution of the seal portion, a portion where R is large, the face pressure is low and the contact length is large, and a portion where R is small, the face pressure is high and the contact length is short are formed. Accordingly, a leak path is minimally formed and hence, an ultimate seal property is improved.

However, in an actual screw joint for a pipe, due to a relationship with manufacturing tolerance of a thread cutting device, there may be a case where it is difficult to make the connecting point of the arc completely agree with the contact starting point with the tapered surface of the box member. In this case, it is preferable to set the inclination of a tangent at the connecting point of the arc smaller than the inclination of the tapered surface of the box member within a range up to 0.5 degrees at maximum. In an actual thread make-up operation, due to the interference between the pin and the coupling in the radial direction, the deformation which causes tapering of the distal end of the pin occurs and hence, the inclination of the tangent of the pin surface at a point of time of make-up completion becomes larger than a designed value. Accordingly, by setting the inclination of the tangent at the connecting point of the arc smaller than the inclination of the taper of the box member within a range of 0.5 degrees or less, it is possible to acquire an advantageous effect substantially equal to an advantageous effect acquired when both inclinations agree with each other.

From a viewpoint of separating the seal portion from the distal end of the nose, it is preferable to set the contact starting point at the position where a distance X from the distal end of the male threaded portion (see Fig. 1(c)) becomes 0.7L (L being the pin nose length as described previously) or less. Further, when the distance from the distal end of the male threaded portion to the contact starting point becomes less than 0.2L, at the time of make-up, the interference is liable to be generated between the seal portion and the threaded portion. Accordingly, it is preferable to set the distance to 0.2L or more. Further, for the sake of safety, it is preferable to set the distance to 0.3L or more.

It is necessary to set the pin nose length L to 5mm or more and less than 20mm. When L is less than 5mm, it is difficult to ensure a length of the seal portion in a pipe axial direction. On the other hand, when an outer diameter of a raw pipe portion of the pin member is 168.3mm or less, a wall thickness of the raw pipe is small and hence, a shoulder thickness becomes small whereby when the pin nose length L becomes 20mm or more, the rigidity of the pin nose 8 becomes insufficient and the external pressure resistance property is lowered. According to the present invention, by limiting the pin nose length L to 5mm or more and less than 20mm, the seal portion can be sufficiently separated or can be spaced apart from the distal end of the pin nose while ensuring rigidity. As a result, because of the elastic deformation within a separation range, damage to the seal portion can be largely reduced whereby such setting of the pin nose length L is effective for stabilization of seal property.

It is preferable that a taper angle α of the tapered surface 20 of the box member 1 be set to a value within 10 degrees . By setting the taper angle α to a value within 10 degrees, and by setting the taper angle α to a value within 5 degrees more preferably, a radial direction sealing method can be preferably realized and hence, make-up torque dependency of the seal property can be lowered relatively.

Since the seal property is stabilized, it is possible to set a seal interference amount S (see Fig. 1(c)) to a value which is relatively small to be used in a radial direction sealing method and hence, a galling risk is small.

With respect to two or more kinds of R in the composite R curve, it is preferable to set values of relatively small R to 1 inch or less, values of relatively large R to 2 inches or more, and values of further larger R to 3 inches or more. To be more specific, it is preferable that among a plurality of R in the composite R curve, at least one R is set to 2 inches or more (more preferably 3 inches or more), and a value of at least one of remaining R is set to less than 2 inches (more preferably 1 inch or less). By setting at least one of the plurality of R in the composite R curve to 2 inches or more (more preferably 3 inches or more), it is possible to easily ensure the contact length of the seal portion. Further, by setting a value of at least one of remaining R to less than 2 inches (preferably 1 inch or less), a high face pressure can be easily achieved.

The number of arcs (the number of arcs having different R) in the composite R curve may be two, three exemplified in Fig. 1 or four or more. With the increase of the number of arcs, a seal contact length is increased so that seal property is further improved. On the other hand, in the actual manufacture of the screw joint for a pipe, time and efforts for checking a load, a size and the like are also increased. Accordingly, it is preferable to design the number of arcs corresponding to the properties which the screw joint is required to satisfy.

A cross-sectional area of the pin member at the above-mentioned contact starting point may be set to 35% or more of a cross-sectional area (cross-sectional area of a pin non-worked portion) of a body of the pipe which forms a joint on a distal end thereof. By setting the cross-sectional area of the pin in such a manner, the rigidity of the pin member at the contact start point is increased and hence, particularly high external pressure resistance property can be easily acquired. It is preferable to set the cross-sectional area of the pin member at the contact starting point to 40% or more of the cross-sectional area of the pipe body.

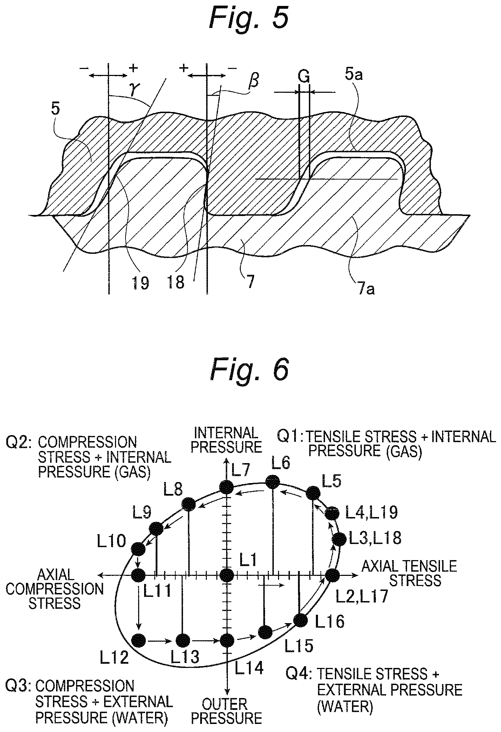

It is confirmed that in addition to the above-mentioned limitation on the shape of the periphery of the seal portion, by restricting one, two or more kinds selected from a group consisting of a load flank angle, a stab flank angle and a thread gap within desired ranges with respect to the male threaded portion and the female threaded portion, the seal property can be improved more wholly. The load flank angle is a load flank angle β shown in Fig. 5, that is, the angle β is an angle which a load flank face 18 makes with respect to a joint axis orthogonal face (meaning a face orthogonal to an axial direction of the screw joint, the same definition being applicable hereinafter). The stab flank angle is a stab flank angle γ shown in Fig. 5, that is, the angle γ which a stab flank face 19 makes with respect to the joint axis orthogonal face. The thread gap is a thread gap G shown in Fig. 5, that is, the gap G is formed between a thread crest 7a of a male thread and a thread groove 5a of a female thread which meshes with the thread crest 7a.

A desired range of the load flank angle β is -5 degrees to 4 degrees, and a lower limit of the desired range is set from a viewpoint of galling resistance property of the threaded portion and a tool lifetime, and an upper limit of the desired range is set from a viewpoint of bending resistance property.

A desired range of the stab flank angle γ is 0 degrees to 30 degrees, and a lower limit of the desired range is set from a viewpoint of galling resistance property of the threaded portion, a tool lifetime and make-up property, and an upper limit of the desired range is set from a viewpoint of axial compression resistance property.

A preferred range of the thread gap G is 0.01 to 0.1mm. A lower limit of the desired range is set from a viewpoint of reducing a galling risk, and an upper limit of the desired range is set from a viewpoint of reducing a load applied to a distal end of the pin at the time of applying an axial compression load. It is preferable to set the thread gap G to at least about 0.03mm by taking into account an error of a lead at the time of thread cutting. It is found that a sufficient property can be effectively exhibited when the thread gap G is approximately 0.045mm and hence, the thread gap G may be set to approximately 0.045mm depending on a situation. A preferred range of the thread gap G is 0.03 to 0.05mm.

An effect of enhancing the seal property wholly by restricting one, two or more kinds selected from a group of a load flank angle, a stab flank angle and a thread gap as described above is particularly apparent under a condition where an axial compression stress is applied once and, thereafter, an axial tensile stress and an internal pressure or an external pressure are applied.

It is preferable that a shoulder angle of the shoulder portion (an angle which an end face of the shoulder portion in a joint axial direction makes with respect to a joint axis orthogonal face, the angle when a pin outer peripheral side of the interface projects toward an outside in the joint axial direction as viewed from a pin inner peripheral side being set as a positive angle) be 0 degrees to 20 degrees. When the shoulder angle is less than 0 degrees, the screw joint brings disadvantages with respect to -seal property and make-up property. On the other hand, when the shoulder angle exceeds 20 degrees, the screw joint brings disadvantages with respect to a point that the plastic deformation of the coupling shoulder portion and the local deformation of the seal portion are liable to occur. It is preferable to set the shoulder angle to 15 degrees or less. Further, it is preferable to set the shoulder angle to 7 degrees or less depending on a situation.

### Example

As present invention examples, the evaluation was performed with respect to screw joints for pipes according to the present invention where screw joints were prepared such that the screw joints have the configuration shown in Fig. 1 or the configuration where two arcs of the composite R curve shown in Fig. 1 are connected to each other with a line segment interposed therebetween (tangents of both arcs to be connected to each other being made to agree with each other except for the arcs which are connected to each other with the line segment interposed therebetween such as the present invention example 4). Sizes and shapes of the examples of the present invention (present invention examples) and comparison examples and the result of the evaluation are shown in Table 1 and Table 2. All pin members were formed on distal ends of steel pipes having an outer diameter of 127.00mm and a wall thickness of 9.19mm. Threads were formed at 5TPI (the number of thread crests per 1 inch: 5). As the evaluation performed in accordance with an FEM analysis, a sealability test was simulated in accordance with ISO13679:2002, and a contact area pressure (ksi·inch) at a seal portion in the simulation was evaluated. The contact area pressure can be obtained by performing an integral calculation of contact face pressures in a seal contact region. In the sealability test, a load test was carried out with respect to the screw joints for pipes based on biaxial stresses corresponding to 95% of a yielding condition of a raw material and an internal pressure, and based on the lower of biaxial stresses corresponding to a collapse condition described in ISO10400:2007 and biaxial stresses corresponding to 95% of the yielding condition of the raw material and an external pressure. A load is applied in accordance with the load path shown in Fig. 6.

As indexes expressing a galling risk at the time of make-up and break-out, values of galling indexes (psi·inch) each of which is defined as a product of a slide distance (inch) of the seal portion and a contact pressure (psi) (=contact face pressure × slide distance) at respective positions in an axial direction from starting of make-up to completion of make-up were obtained by an FEM analysis. The galling indexes were also obtained by integral calculation. It is safe to say that the smaller the galling index, the smaller the galling risk becomes. For comparison purpose, a contact face pressure and a galling index were obtained in the same manner with respect to a case (comparison examples 1, 3, 4) where a generating line of an outer peripheral surface of a pin nose 8 is formed into a convex curve shape having a single R (a single R curve M indicated by a broken line in Fig. 1) shape and a case (comparison example 2) where a generating line of an outer peripheral surface of a pin nose 8 is formed of a composite R curve but a requirement that the remoter R of an arc from a male threaded portion 7, the larger R of the arc becomes is not satisfied.

In the comparison examples 2, 4, a pin nose length L was set to 20mm or more which falls outside the range of the present invention in addition to the above-mentioned requirements.

Further, with respect to those present invention examples and the comparison examples, a plurality of samples having different seal interference amounts were prepared by setting a thread interference amount to 0.305mm per diameter, and a physical test was carried out in accordance with a testing method stipulated in ISO13679:2002. Further, a plurality of samples were prepared where a seal interference amount was changed by setting a thread interference amount to 0.127mm per diameter, and a make-up and break-out test was carried out 13 times repeatedly. From those tests, a minimum seal interference amount at which a leak was not generated in the physical test and a maximum seal interference amount at which galling was not generated during make-up and break-out 13 times in the repeated make-up and break-out test were obtained, and the difference between the minimum seal interference amount and the maximum seal interference amount was set as a settable seal interference amount range.

With respect to the present invention examples and the comparison examples, together with sizes of respective parts of the screw joint, the contact area pressures and the galling indexes obtained by FEM calculation and the maximum and minimum seal interference amounts obtained by the actual physical test and the repeated make-up and break-out tests are shown in Table 1. The seal interference amount in Table 1 is a value per diameter, and is a value corresponding to seal interference amount S shown in Fig. 1(c) × 2.

With respect to a contact area pressure under an internal pressure condition obtained by the FEM calculation, an ultimately small value (corresponding to a state where leak is most liable to occur) appeared in the vicinity of load steps L3, L18 (biaxial tensile stresses + internal pressure) during load path shown in Fig. 6 in all examples. Although the load point is not stipulated in ISO13679, the load point is the strictest condition under a condition where an inner pressure and a tensile stress are applied, and there may be a case where such a load point is necessary. Accordingly, the load point is also described in the comparison example. On the other hand, with respect to a contact area pressure under an external pressure condition obtained by the FEM calculation, an ultimately small value was indicated in the vicinity of (biaxial tensile stresses + external pressure) a load step L15 in the load path shown in Fig. 6 in all examples. In Table 1, ultimately small values of the contact area pressures of the respective examples are expressed as relative ultimately small values. An internal pressure is applied by a gas and an external pressure is applied by water and hence, easiness of leak differs whereby relative ultimately small values were obtained using the respective ultimately small values of the internal pressure condition and the external pressure condition as references. That is, with respect to ultimately small values of L3 and L18, a minimum ultimately small value in all examples is set to 100 with respect to L3 and L18, other values are expressed as ratios with respect to the minimum ultimately small value. Further, with respect to ultimately small values of L15, a minimum ultimately small value in all examples is set to 100 with respect to L15, other values are expressed as ratios with respect to the minimum ultimately small value.

A determination reference value is set such that a contact area pressure of 100 or less is disqualified with respect to seal property, and a galling index of 100 or more is disqualified.

In the load step L18 which comes after the screw joint was subjected to compression load path, seal property is deteriorated in comparison with the load step L3 which is the same load point before receiving the compression load path, and the apparent deterioration of seal property is observed with respect to the comparison example 3 not having a sufficient shoulder thickness particularly. In all results, the present invention examples exhibit favorable seal property in L18 after compression load path.

With respect to the galling index, the joint axial directional position indicating an ultimately large value (corresponding to a state where a galling risk is highest) differed for respective examples. In Table 1, the ultimately large value of the galling index in respective examples is expressed as a relative ultimately large value (the maximum ultimately large value in all examples being expressed as 100, and other ultimately large values being expressed as ratios with respect to the maximum ultimately large value).

The result of evaluation at other sizes is shown in Table 3. Objects which were subjected to the evaluation are a screw joint having an outer diameter of 139.70mm, a wall thickness of 7.72mm, and 5TPI and a screw joint having an outer diameter of 88.90mm, a wall thickness of 10.92mm and 6TPI. In all sizes, the present invention examples exhibited excellent seal property after compression load path and excellent galling resistance property at the time of make-up and break-out.

From the evaluation results shown in Table 1, Table 2 and Table 3, all present invention examples can realize the screw joints which, compared to the screw joints of the comparison examples, exhibit the smaller or approximately equal galling indexes, can set a wide seal interference amount range, and have excellent seal property and galling resistance property in spite of a high contact area pressure.

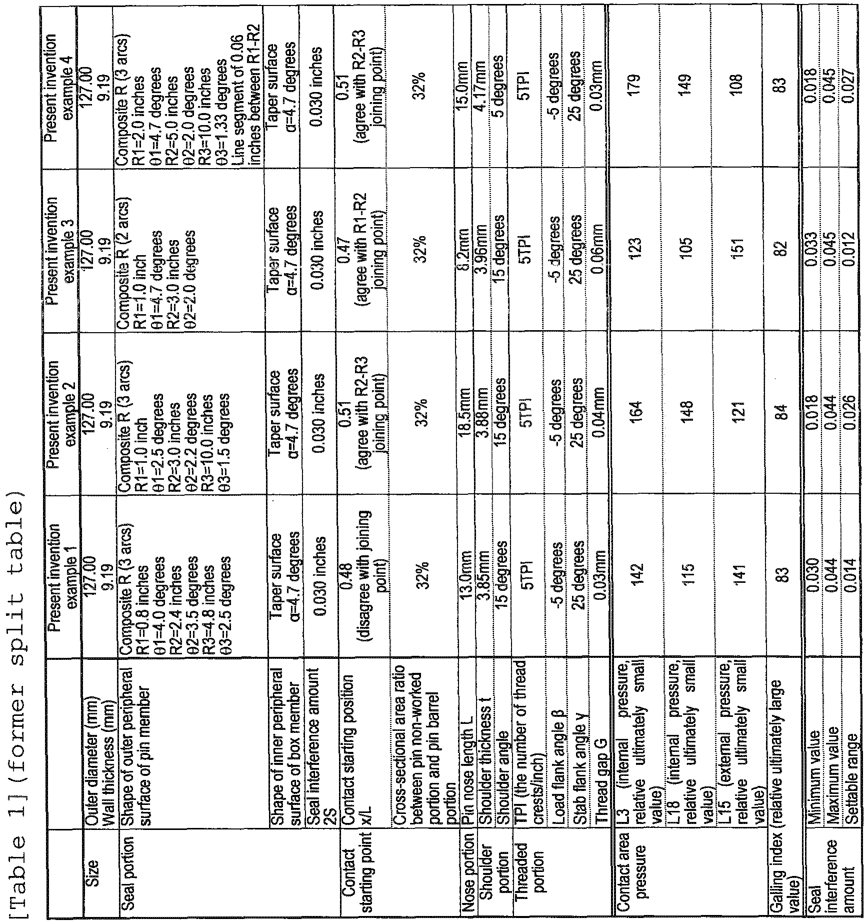

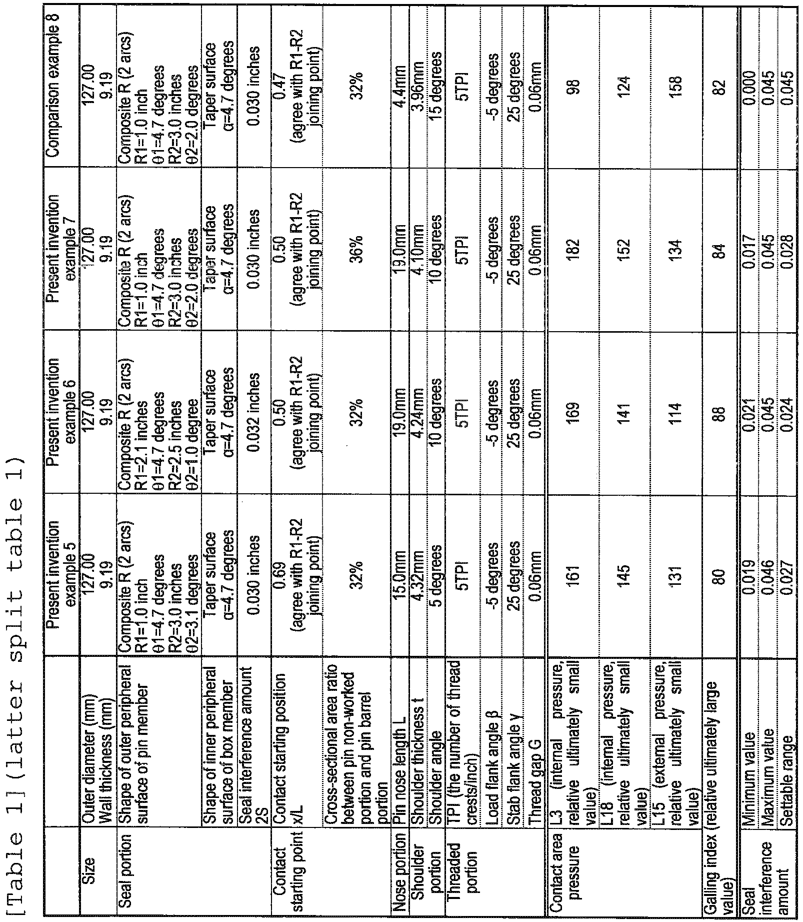

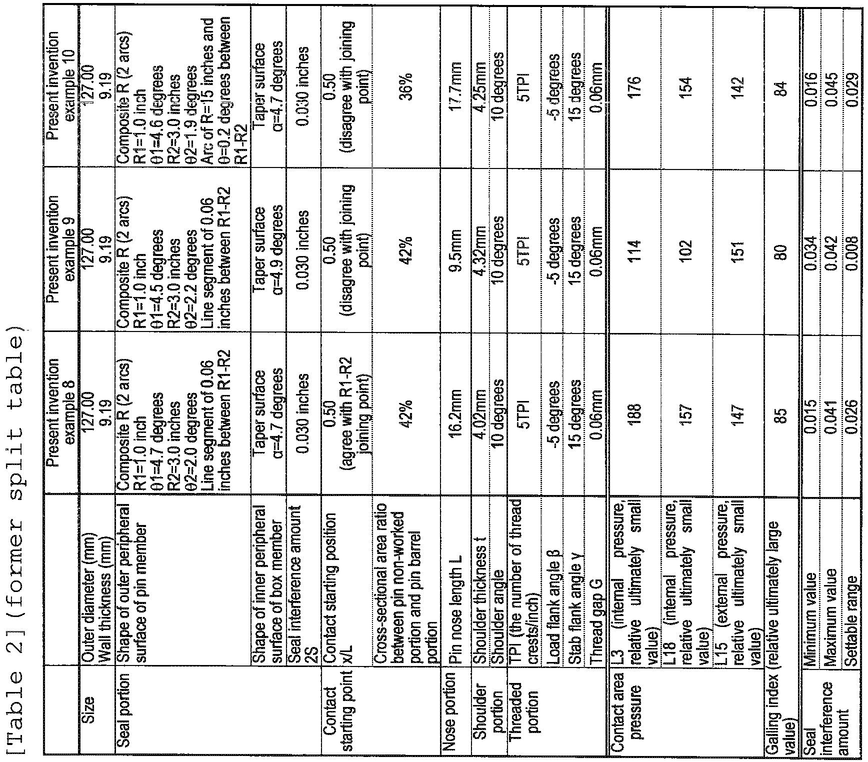

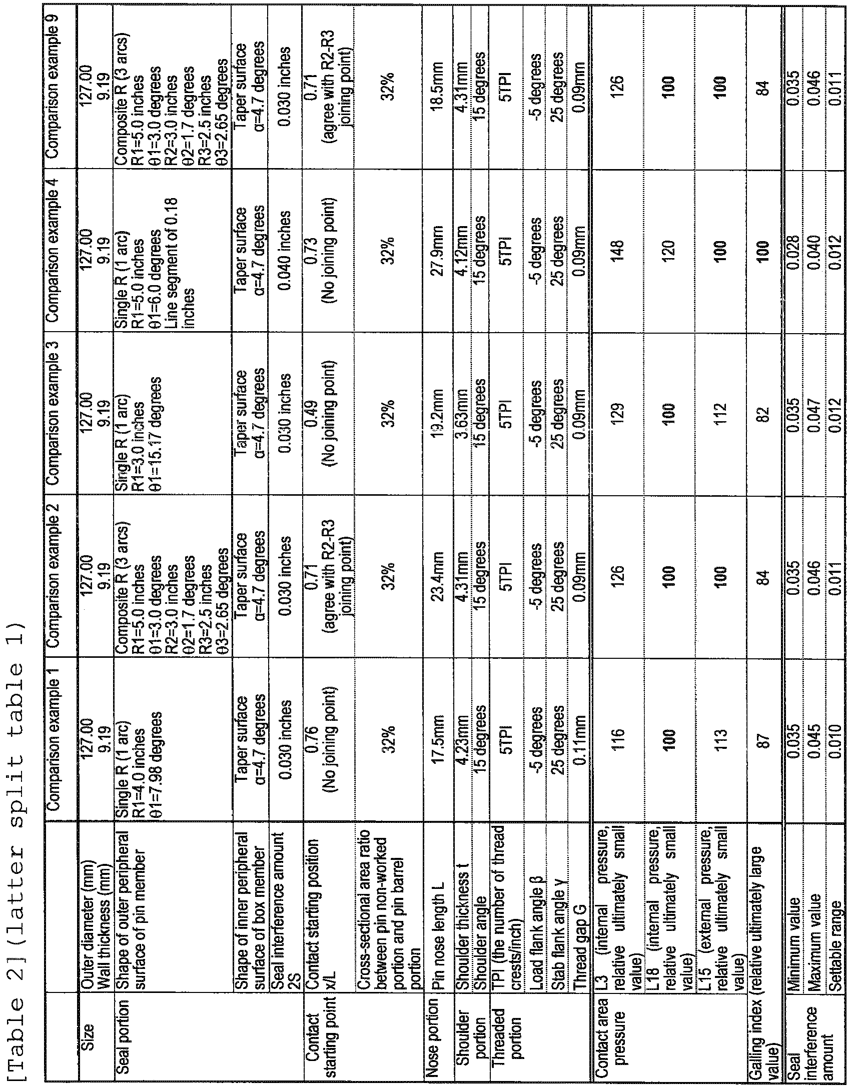

**[Table 3]**

| | | Present invention example 11 | Comparison example 5 | Present invention example 12 | Comparison example 6 | Comparison example 7 |
|---|---|---|---|---|---|---|
| Size | Outer diameter (mm) | 139.70 | 139.70 | 88.90 | 88.90 | 88.90 |
| | Wall thickness (mm) | 7.72 | 7.72 | 10.92 | 10.92 | 10.92 |
| Seal portion | Shape of outer peripheral surface of pin member | Composite R (3 arcs) | Single R (1 arc) | Composite R (2 arcs) | Composite R (2 arcs) | Single R (1 arc) |
| | | R1=0.8 inches | R1=4.0 inches | R1=1.0 inch | R1=1.0 inch | R1=5.0 inches |
| | | θ1=4.0 degrees | θ1=7.98 degrees | θ1=4.7 degrees | θ1=4.7 degrees | θ1=6.0 degrees |
| | | R2=2.4 inches | | R2=2.0 inches | R2=2.0 inches | Line segment of 0.18 |
| | | θ2=3.5 degrees | | θ2=1.0 degree | θ2=1.0 degree | inches |
| | | R3=4.8 inches | | Line segment of 0.06 | Line segment of 0.06 | |
| | | θ3=2.5 degrees | | inches between R1-R2 | inches between R1-R2 | |
| | Shape of inner peripheral surface of box member | Taper surface | Taper surface | Taper surface | Taper surface | Taper surface |
| | | α=4.7 degrees | α=4.7 degrees | α=4.7 degrees | α=4.7 degrees | α=4.7 degrees |
| | Seal interference amount 2S | 0.030 inches | 0.030 inches | 0.030 inches | 0.030 inches | 0.040 inches |
| Contact starting point | Contact starting position x/L | 0.48 | 0.76 | 0.50 | 0.50 | 0.73 |
| | | (disagree with joining point) | (No joining point) | (agree with R1-R2 joining point) | (agree with R1-R2 joining point) | (No joining point) |
| | Cross-sectional area ratio between pin non-worked portion and pin barrel portion | 32% | 32% | 32% | 32% | 32% |
| Nose portion | Pin nose length L | 16.8mm | 24.1mm | 9.5mm | 21.0mm | 11.0mm |
| Shoulder portion | Shoulder thickness t | 2.68mm | 3.32mm | 4.83mm | 4.83mm | 5.12mm |
| | Shoulder angle | 5 degrees | 15 degrees | 10 degrees | 10 degrees | 15 degrees |
| Threaded portion | TPI (the number of thread crests/inch) | 5TPI | 5TPI | 6TPI | 6TPI | 6TPI |
| | Load flank angle β | -5 degrees | -5 degrees | -5 degrees | -5 degrees | -5 degrees |
| | Stab flank angle γ | 25 degrees | 25 degrees | 15 degrees | 15 degrees | 25 degrees |
| | Thread gap G | 0.03mm | 0.11mm | 0.06mm | 0.06mm | 0.09mm |
| Contact area pressure | L3 (internal pressure, relative ultimately small value) | 155 | 115 | 153 | 134 | 120 |
| | L18 (internal pressure, relative ultimately small value) | 136 | **100** | 128 | 111 | **100** |
| | L15 (external pressure, relative ultimately small value) | 132 | **100** | 124 | **100** | **100** |
| Galling index (relative ultimately large value) | | 98 | **100** | 83 | 81 | **100** |
| Seal interference amount | Minimum value | 0.024 | 0.033 | 0.023 | 0.022 | 0.033 |
| | Maximum value | 0.046 | 0.045 | 0.052 | 0.051 | 0.045 |
| | Settable range | 0.022 | 0.012 | 0.029 | 0.029 | 0.012 |

### Reference Signs List

1 box member
2 pin (pin member)
5 female thread (female threaded portion)
5a thread groove of female thread
7 male thread (male threaded portion)
7a thread crest of male thread
8 nose portion (pin nose)
11, 13 and 14 seal portion (particularly metal touch seal portion)
12 and 14 shoulder portion (particularly torque shoulder portion)
18 load flank face
19 stab flank face
20 inner peripheral surface of box member which faces outer peripheral surface of nose portion of pin member (tapered surface)
30 outer peripheral surface of nose portion of pin member (outer peripheral surface of pin nose)
40a interference region

## Claims

1. A screw joint for a pipe comprising:
a pin member (3) having a male threaded portion (7), a nose portion (8) extending toward a pipe end side from the male threaded portion, and a shoulder portion (12) formed on a distal end of the nose portion; and
a box member (1) having a female threaded portion (5) which is threadedly joined to the male threaded portion by thread engagement, an inner peripheral surface (20) which faces an outer peripheral surface (30) of the nose portion of the pin member (3) in an opposed manner, and a shoulder portion (14) which is brought into contact with the shoulder portion (12) of the pin member, wherein
the outer peripheral surface (30) of the nose portion of the pin member and the inner peripheral surface (20) of the box member are brought into a metal to metal contact due to joining of the pin member (3) and the box member (1) by threaded engagement, and a contact interface forms a seal surface (40),
the outer peripheral surface (30) of the nose portion of the pin member is formed into an outwardly projecting convex curve as viewed in cross section taken along an axial direction of the pin member,
the convex curve is formed into a curved shape where a composite R curve is formed by sequentially connecting a plurality of outwardly convex arcs having different radii of curvature R from each other on a generating line of a cylindrical portion disposed adjacent to the male threaded portion (7), a radius of curvature R of the arc is increased as the arc is away from the male threaded portion, and a tangent of the arc on a connecting point agrees with a tangent of the arc which is a connection counterpart,
the inner peripheral surface (20) of the box member is formed into a tapered surface which interferes with the outer peripheral surface (30) of the nose portion of the pin member at the time of joining with the pin member, and
wherein an outer diameter of a raw pipe portion of the pin member (3) is set to 168.3mm or less, and a length of the nose portion (8) is set to 5mm or more and less than 20mm.

2. The screw joint for a pipe according to claim 1, wherein an angle which each arc in the inside of the composite R curve makes is set such that the closer to the male threaded portion (7), the larger the angle which each arc makes is.

3. The screw joint for a pipe according to claims 1 or 2, wherein any one of the connecting points in the composite R curve becomes a contact starting point with the tapered surface.

4. The screw joint for a pipe according to any one of claims 1 to 3, wherein an angle (α) which the tapered surface makes with an axial direction of the joint is set to a value which falls within a range of 10 degrees.

5. The screw joint for a pipe according to any one of claims 1 to 4, wherein the male threaded portion (7) and the female threaded portion (5) have a stab flank angle (γ) which falls within a range of 0 degrees to 30 degrees.

6. The screw joint for a pipe according to any one of claims 1 to 5, wherein the male threaded portion (7) and the female threaded portion (5) have a load flank angle (β) which falls within a range of -5 degrees to 4 degrees.

7. The screw joint for a pipe according to any one of claims 1 to 6, wherein a shoulder angle of the shoulder portion falls within a range of 0 degrees to 20 degrees.

8. The screw joint for a pipe according to any one of claims 1 to 7, wherein the male threaded portion (7) and the female threaded portion (5) have a thread gap which falls within a range of 0.01 to 0.1mm.

9. The screw joint for a pipe according to any one of claims 1 to 8, wherein,
in place of the composite R curve which is formed by sequentially connecting the plurality of arcs having different radii of curvature R from each other on the generating line of the cylindrical portion disposed adjacent to the male threaded portion (7),
a different composite R curve is used, the different composite R curve being formed by sequentially connecting a plurality of arcs having different radii of curvature R from each other on a generating line of a cylindrical portion disposed adjacent to the male threaded portion (7) directly or by way of line segments each having a length of 2.5mm or less.

10. The screw joint for a pipe according to any one of claims 1 to 8, wherein,
in place of the composite R curve which is formed by sequentially connecting the plurality of arcs having the different radii of curvature R from each other on the generating line of the cylindrical portion disposed adjacent to the male threaded portion (7),
a different composite R curve is used, the different composite R curve being formed by sequentially connecting a plurality of arcs having different radii of curvature R from each other on a generating line of a cylindrical portion disposed adjacent to the male threaded portion (7) by way of arcs each having a length of 2.5mm or less and having a radius of 250mm or more and three or more times as large as a radius of the arc arranged adjacent to the arc.

## Patentansprüche

1. Verschraubung für ein Rohr, umfassend:
ein Stiftelement (3) mit einem Außengewindeabschnitt (7), einem Nasenabschnitt (8), der sich zu einer Rohrendseite von dem Außengewindeabschnitt aus erstreckt, und einem Schulterabschnitt (12), der an einem distalen Ende des Nasenabschnitts ausgebildet ist; und
ein Kastenelement (1) mit einem Innengewindeabschnitt (5), der durch Gewindeeingriff mit dem Außengewindeabschnitt gewindemäßig verbunden ist, einer inneren Umfangsfläche (20), die einer äußeren Umfangsfläche (30) des Nasenabschnitts des Stiftelements (3) entgegengesetzt gegenüberliegt, und
einem Schulterabschnitt (14), der mit dem Schulterabschnitt (12) des Stiftelements in Kontakt gebracht wird, wobei
die äußere Umfangsfläche (30) des Nasenabschnitts des Stiftelements und die innere Umfangsfläche (20) des Kastenelements durch Verbinden des Stiftelements (3) und des Kastenelements (1) durch Gewindeeingriff in einen Metall-Metall-Kontakt gebracht werden und eine Kontaktschnittstelle eine Dichtfläche (40) bildet,
wobei die äußere Umfangsfläche (30) des Nasenabschnitts des Stiftelements im Querschnitt entlang einer axialen Richtung des Stiftelements betrachtet zu einer nach außen vorstehenden konvexen Kurve geformt ist,
wobei die konvexe Kurve zu einer gekrümmten Form geformt wird, wobei eine zusammengesetzte R-Kurve gebildet wird, indem eine Vielzahl von nach außen konvexen Bögen mit unterschiedlichen Krümmungsradien R nacheinander auf einer Erzeugungslinie eines zylindrischen Abschnitts, der angrenzend an den Außengewindeabschnitt (7) angeordnet ist, miteinander verbunden wird, ein Krümmungsradius R des Bogens vergrößert wird, wenn der Bogen von dem Außengewindeabschnitt entfernt ist, und eine Tangente des Bogens an einem Verbindungspunkt mit einer Tangente des Bogens übereinstimmt, die ein Verbindungsgegenstück ist,
wobei die innere Umfangsfläche (20) des Kastenelements zu einer konischen Oberfläche geformt ist, die sich mit der äußeren Umfangsfläche (30) des Nasenabschnitts des Stiftelements zum Zeitpunkt der Verbindung mit dem Stiftelement überschneidet, und
wobei ein Außendurchmesser eines Rohrohrabschnitts des Stiftelements (3) auf 168.3mm oder weniger eingestellt ist, und eine Länge des Nasenabschnitts (8) auf 5mm oder mehr und weniger als 20mm eingestellt ist.

2. Verschraubung für ein Rohr nach Anspruch 1, wobei ein Winkel, den jeder Bogen im Inneren der zusammengesetzten R-Kurve bildet, so eingestellt ist, dass je näher am Außengewindeabschnitt (7), desto größer ist der Winkel, den jeder Bogen bildet.

3. Verschraubung für ein Rohr nach Anspruch 1 oder 2, wobei jeder der Verbindungspunkte in der zusammengesetzten R-Kurve zu einem Kontaktstartpunkt mit der konischen Oberfläche wird.

4. Verschraubung für ein Rohr nach einem der Ansprüche 1 bis 3, wobei ein Winkel (α), den die konische Oberfläche mit einer axialen Richtung der Verschraubung bildet, auf einen Wert eingestellt ist, der in einen Bereich von 10 Grad fällt.

5. Verschraubung für ein Rohr nach einem der Ansprüche 1 bis 4, wobei der Außengewindeabschnitt (7) und der Innengewindeabschnitt (5) einen Stichflankenwinkel (γ) aufweisen, der in einen Bereich von 0 Grad bis 30 Grad fällt.

6. Verschraubung für ein Rohr nach einem der Ansprüche 1 bis 5, wobei der Außengewindeabschnitt (7) und der Innengewindeabschnitt (5) einen Lastflankenwinkel (β) aufweisen, der in einen Bereich von -5 Grad bis 4 Grad fällt.

7. Verschraubung für ein Rohr nach einem der Ansprüche 1 bis 6, wobei ein Schulterwinkel des Schulterabschnitts in einen Bereich von 0 Grad bis 20 Grad fällt.

8. Verschraubung für ein Rohr nach einem der Ansprüche 1 bis 7, wobei der Außengewindeabschnitt (7) und der Innengewindeabschnitt (5) einen Gewindespalt aufweisen, der in einen Bereich von 0,01 bis 0,1 mm fällt.

9. Verschraubung für ein Rohr nach einem der Ansprüche 1 bis 8, wobei anstelle der zusammengesetzten R-Kurve, die durch sequentielles Verbinden der Vielzahl von Bögen mit unterschiedlichen Krümmungsradien R auf der Erzeugungslinie des zylindrischen Abschnitts, der angrenzend an den Außengewindeabschnitt (7) angeordnet ist, gebildet wird,
eine unterschiedlich zusammengesetzte R-Kurve verwendet wird, wobei die unterschiedlich zusammengesetzte R-Kurve gebildet wird, indem eine Vielzahl von Bögen mit unterschiedlichen Krümmungsradien R nacheinander auf einer Erzeugungslinie eines zylindrischen Abschnitts, der angrenzend an den Außengewindeabschnitt (7) direkt oder über Liniensegmente mit jeweils einer Länge von 2.5mm oder weniger angeordnet ist, miteinander verbunden wird.

10. Verschraubung für ein Rohr nach einem der Ansprüche 1 bis 8, wobei
anstelle der zusammengesetzten R-Kurve, die durch sequenzielles Verbinden der Vielzahl von Bögen mit den voneinander unterschiedlichen Krümmungsradien R auf der Erzeugungslinie des zylindrischen Abschnitts gebildet wird, der angrenzend an den Außengewindeabschnitt (7) angeordnet ist,
eine unterschiedliche zusammengesetzte R-Kurve verwendet wird, wobei die unterschiedlich zusammengesetzte R-Kurve gebildet wird, indem eine Vielzahl von Bögen mit unterschiedlichen Krümmungsradien R nacheinander auf einer Erzeugungslinie eines zylindrischen Abschnitts, der angrenzend an den Außengewindeabschnitt (7) angeordnet ist, über Bögen mit einer Länge von jeweils 2.5mm oder weniger miteinander verbunden wird und mit einem Radius von 250mm oder mehr und drei- oder mehrmals so groß wie ein Radius des Bogens, der benachbart zum Bogen angeordnet ist.

## Revendications

1. Raccord fileté pour un tuyau comprenant :
un élément mâle (3) comportant une partie filetée mâle (7), une partie de nez (8) s'étendant vers un côté d'extrémité de tuyau à partir de la partie filetée mâle, et une partie d'épaulement (12) formée sur une extrémité distale de la partie de nez ; et
un élément femelle (1) comportant une partie filetée femelle (5) qui est raccordée par vissage à la partie filetée mâle par une mise en prise par vissage, une surface périphérique intérieure (20) qui fait face à une surface périphérique extérieure (30) de la partie de nez de l'élément mâle (3) d'une manière opposée, et une partie d'épaulement (14) qui est amenée en contact avec la partie d'épaulement (12) de l'élément mâle, dans lequel
la surface périphérique extérieure (30) de la partie de nez de l'élément mâle et la surface périphérique intérieure (20) de l'élément femelle sont amenées en contact métal sur métal du fait de la jonction de l'élément mâle (3) et de l'élément femelle (1) par une mise en prise par vissage, et une interface de contact forme une surface de joint (40),
la surface périphérique extérieure (30) de la partie de nez de l'élément mâle est réalisée en la forme d'une courbe convexe se projetant vers l'extérieur telle que vue en coupe le long d'une direction axiale de l'élément mâle,
la courbe convexe est réalisée en une forme incurvée où une courbe à R composite est formée en reliant séquentiellement une pluralité d'arcs convexes vers l'extérieur ayant des rayons de courbure R différents les uns des autres sur une génératrice d'une partie cylindrique disposée adjacente à la partie filetée mâle (7), un rayon de courbure R de l'arc augmente alors que l'arc s'éloigne de la partie filetée mâle, et une tangente de l'arc à un point de liaison correspond à une tangente de l'arc qui est une contrepartie de liaison,
la surface périphérique intérieure (20) de l'élément femelle est réalisée en une surface effilée qui interfère avec la surface périphérique extérieure (30) de la partie de nez de l'élément mâle à l'instant de jonction avec l'élément mâle, et
dans lequel un diamètre extérieur d'une partie de tuyau brute de l'élément mâle (3) est établi à 168,3 mm ou moins, et une longueur de la partie de nez (8) est établie à 5 mm ou plus et moins de 20 mm.

2. Raccord fileté pour un tuyau selon la revendication 1, dans lequel un angle que chaque arc à l'intérieur de la courbe à R composite forme est établi de sorte que plus la partie filetée mâle (7) est proche, plus l'angle que chaque arc forme est grand.

3. Raccord fileté pour un tuyau selon les revendications 1 ou 2, dans lequel l'un quelconque des points de liaison de la courbe à R composite devient un point de début de contact avec la surface effilée.

4. Raccord fileté pour un tuyau selon l'une quelconque des revendications 1 à 3, dans lequel un angle (α) que la surface effilée forme avec une direction axiale du raccord est établi à une valeur qui tombe dans une plage de 10 degrés.

5. Raccord fileté pour un tuyau selon l'une quelconque des revendications 1 à 4, dans lequel la partie filetée mâle (7) et la partie filetée femelle (5) ont un angle de flanc de guidage (γ) qui tombe dans une plage de 0 degré à 30 degrés.

6. Raccord fileté pour un tuyau selon l'une quelconque des revendications 1 à 5, dans lequel la partie filetée mâle (7) et la partie filetée femelle (5) ont un angle de flanc de charge (β) qui tombe dans une plage de -5 degrés à 4 degrés.

7. Raccord fileté pour un tuyau selon l'une quelconque des revendications 1 à 6, dans lequel un angle d'épaulement de la partie d'épaulement tombe dans une plage de 0 degré à 20 degrés.

8. Raccord fileté pour un tuyau selon l'une quelconque des revendications 1 à 7, dans lequel la partie filetée mâle (7) et la partie filetée femelle (5) ont un jeu de filetage qui tombe dans une plage de 0,01 à 0,1 mm.

9. Raccord fileté pour un tuyau selon l'une quelconque des revendications 1 à 8, dans lequel,
au lieu de la courbe à R composite qui est formée en reliant séquentiellement la pluralité d'arcs ayant des rayons de courbure R différents les uns aux autres sur la génératrice de la partie cylindrique disposée adjacente à la partie filetée mâle (7),
une courbe à R composite différente est utilisée, la courbe à R composite différente étant formée en reliant séquentiellement une pluralité d'arcs ayant des rayons de courbure R différents les uns des autres sur une génératrice d'une partie cylindrique disposée adjacente à la partie filetée mâle (7) directement ou au moyen de segments de droite ayant chacun une longueur de 2,5 mm ou moins.

10. Raccord fileté pour un tuyau selon l'une quelconque des revendications 1 à 8, dans lequel,
au lieu de la courbe R composite qui est formée en reliant séquentiellement la pluralité d'arcs ayant les rayons de courbure R différents les uns des autres sur la génératrice de la partie cylindrique disposée adjacente à la partie filetée mâle (7),
une courbe à R composite différente est utilisée, la courbe à R composite différente étant formée en reliant séquentiellement une pluralité d'arcs ayant des rayons de courbure R différents les uns des autres sur une génératrice d'une partie cylindrique disposée adjacente à la partie filetée mâle (7) au moyen d'arcs ayant chacun une longueur de 2,5 mm ou moins et ayant un rayon de 250 mm ou plus et trois fois plus grand ou plus qu'un rayon de l'arc agencé adjacent à l'arc.
